# EUROPEAN PATENT APPLICATION

(11) **EP 4 675 452 A1**
(43) Date of publication of application: **07.01.2026**
(21) Application number: 24921240.8
(22) Date of filing: 27.05.2024
(51) Int. Cl.: G06F 15/78, G06F 15/163

(54) **MULTI-ACCELERATOR-CARD HETEROGENEOUS SERVER AND RESOURCE LINK RECONSTRUCTION METHOD**

(30) Priority: 31.01.2024 CN 202410131445
(71) Applicant: Suzhou Metabrain Intelligent Technology Co., Ltd., Suzhou, Jiangsu 215000 (CN)
(72) Inventor: GAO, Xianyang, Suzhou, Jiangsu 215000 (CN); CI, Tanlong, Suzhou, Jiangsu 215000 (CN); WU, An, Suzhou, Jiangsu 215000 (CN); XU, Tong, Suzhou, Jiangsu 215000 (CN)
(74) Representative: Michalski Hüttermann & Partner Patentanwälte mbB
(86) International application number: PCT/CN2024/095521
(87) International publication number: WO 2025/161198

(57) **Abstract**

Provided in the present application are a multi-accelerator-card heterogeneous server and a resource link reconstruction method. The server comprises a switch unit, a heterogeneous accelerated-computing pooling unit and a general-purpose computing resource pooling unit, wherein the general-purpose computing resource pooling unit comprises at least one processor, the heterogeneous accelerated-computing pooling unit comprises at least two accelerator cards, and the processor and the accelerator cards are heterogeneous relative to each other; the switch unit comprises a management controller and at least two switch chips, any switch chip is connected to at least one of the other switch chips in the switch unit by means of an internal port, and the processor and the accelerator cards are respectively connected to the switch chips; and the management controller is connected to the switch chips, and is used for reconstructing a resource link on the basis of preset task resource requirements and chip information of the current switch chips.

## Description

### CROSS-REFERENCE TO RELATED APPLICATION

The present disclosure claims the priority of Chinese patent application filed on January 31, 2024 before the CNIPA, China National Intellectual Property Administration with the application number of 202410131445.7, and the title of "HETEROGENEOUS SERVER WITH MULTIPLE ACCELERATOR CARDS AND RESOURCE LINK RECONFIGURATION METHOD", which is incorporated herein in its entirety by reference.

### FIELD

The present disclosure relates to the field of computer technologies, and in particular to a heterogeneous server with multiple accelerator cards and a resource link reconfiguration method.

### BACKGROUND

Dedicated computing acceleration servers are usually heterogeneous servers, for example, artificial intelligence (AI) servers that require high computing power. At present, artificial intelligence application load is developing very rapid, and the demand for computing power is increasing exponentially, especially the rapid development of typical applications of artificial intelligence such as generative AI, large models and deep learning intelligent recommendation. The whole system of an artificial intelligence heterogeneous server is also facing many challenges, for example, improving computing power efficiency and system performance. It is necessary to continue to strengthen research and innovation to support the sustainable development of high-performance computing power infrastructure.

The total training speed of an artificial intelligence model is equal to the product of a single card speed, a number of accelerator cards and a multi-card acceleration ratio.

For the single card speed, it is determined by an operation speed and a speed of data input/output (IO), and thus it is necessary to optimize the single card training. Main technical means include precision training, operator fusion and gradient accumulation, so as to speed up the training performance of single cards.

For the number of accelerator cards, theoretically speaking, the more accelerator cards, the faster the model training. However, with the further growth of a scale of the training data set, data parallelism will have limitations. When training resources expand to a certain scale, the marginal effect of increasing computing resources (that is, the accelerator cards) will become more obvious due to the existence of communication bottlenecks, and even increasing resources will not be able to accelerate. At this time, it is necessary to optimize the network communication topology to optimize training modes.

For the multi-card acceleration ratio, it is determined by the calculation and communication efficiency, and needs to be optimized together with algorithms and network communication topology in the cluster. A multi-dimensional hybrid parallel strategy combining data parallel (DP), model parallel (MP) and pipeline parallelism (PP) can be used to increase the efficiency of multi-card training.

At present, on a single accelerator card (for example, a graphics processing unit (GPU)), the performance is limited, and the acceleration ratio of multi-card parallel operation reaches the limit of parallel algorithm and communication bandwidth between devices, increasing the number of accelerator cards is a direct and effective means to improve the system computing power and training speed of artificial intelligence heterogeneous server. Therefore, in the case of increasing the number of accelerator cards, how to optimize the network communication efficiency between multiple accelerator cards with general computing resources (for example, a central processing unit (CPU)) to improve the processing performance of tasks (for example, training large models) is an urgent technical problem that needs to be solved.

### SUMMARY

According to embodiments disclosed in the present disclosure, in a first aspect, there is provided a heterogeneous server with multiple accelerator cards, including: a switching unit, a heterogeneous accelerated computing pooling unit and a general computing resource pooling unit, where
the general computing resource pooling unit includes at least one processor, and the heterogeneous accelerated computing pooling unit includes at least two accelerator cards, where the at least one processor and the at least two accelerator cards are heterogeneous to each other;
the switching unit includes a management controller and at least two switching chips, where any switching chip in the at least two switching chips is connected to at least one other switching chip in the switching unit through an internal port, the at least one processor is connected to an uplink port of the switching chip, and one or more of the at least two accelerator cards are connected to a downlink port of the switching chip; and
the management controller is connected to each of the at least two switching chips, and is configured to determine a resource link reconfiguration instruction according to a preset task resource requirement and chip information of each current switching chip, and send the resource link reconfiguration instruction to each target switching chip to form a resource link for completing a computing task corresponding to the task resource requirement.

In a second aspect, there is further provided a resource link reconfiguration method, which is implemented based on any one of the above heterogeneous server with multiple accelerator cards, and is applied to a management controller, the method including:
obtaining a task resource requirement and chip information of each current switching chip;
determining a resource link reconfiguration instruction according to the task resource requirement and the chip information of each current switching chip; and
sending the resource link reconfiguration instruction to each target switching chip to form a resource link for completing a computing task corresponding to the task resource requirement.

In a third aspect, there is further provided a resource link reconfiguration apparatus, which is implemented based on any one of the above heterogeneous server with multiple accelerator cards, and is applied to a management controller, the apparatus including:
an information obtaining module configured to obtain a task resource requirement and chip information of each current switching chip;
an instruction determining module configured to determine a resource link reconfiguration instruction according to the task resource requirement and the chip information of each current switching chip; and
an instruction sending module configured to send the resource link reconfiguration instruction to each target switching chip to form a resource link for completing a computing task corresponding to the task resource requirement.

In a fourth aspect, there is further provided an electronic device, including: a memory, a processor and computer readable instructions stored in the memory and executable on the processor, where the processor implements the resource link reconfiguration method according to the second aspect described above when executing the program

In a fifth aspect, there is further provided a non-transitory computer readable storage medium having computer readable instructions stored thereon, where the computer readable instructions, when executed by one or more processors, cause the processors to perform the resource link reconfiguration method according to the second aspect described above.

Details of one or more embodiments of the present disclosure are set forth in the following accompanying drawings and descriptions. Other features and advantages of the present disclosure will become apparent from the description and accompanying drawings and from the claims.

### BRIEF DESCRIPTION OF THE DRAWINGS

In order to illustrate technical solutions in the embodiments of the present disclosure more clearly, the following briefly describes the accompanying drawings required for the embodiments. Obviously, the accompanying drawings in the following descriptions show only some embodiments of the present disclosure, and a person skilled in the art may derive other drawings from these accompanying drawings without creative efforts.
FIG. 1 is a schematic structural diagram of a heterogeneous server with multiple accelerator cards according to one or more embodiments of the present disclosure.
FIG. 2 is a schematic diagram of Fabric interconnection routing of dual switching chips in a heterogeneous server with multiple accelerator cards according to one or more embodiments of the present disclosure.
FIG. 3 is a functional schematic diagram of a management controller in a switching unit of a heterogeneous server with multiple accelerator cards according to one or more embodiments of the present disclosure.
FIG. 4 is a topology diagram of a switching network composed of eight switching chips divided into two groups in a switching unit of a heterogeneous server with multiple accelerator cards according to one or more embodiments of the present disclosure.
FIG. 5 is a schematic structural diagram of a heterogeneous server with thirty-two accelerator cards based on the topology diagram of a switching network in FIG. 4 according to one or more embodiments of the present disclosure.
FIG. 6 is a schematic structural diagram of a heterogeneous server with sixteen accelerator cards in a switching network composed of five switching chips according to one or more embodiments of the present disclosure.
FIG. 7 is a schematic structural diagram of hardware connections of a switching unit in a heterogeneous server with multiple accelerator cards according to one or more embodiments of the present disclosure.
FIG. 8 is a schematic diagram of a data management link of a switching unit in a heterogeneous server with multiple accelerator cards according to one or more embodiments of the present disclosure.
FIG. 9 is a topology diagram of data management links of a switching unit and a heterogeneous accelerated computing pooling unit in a heterogeneous server with multiple accelerator cards according to one or more embodiments of the present disclosure.
FIG. 10 is a schematic structural diagram of hardware connections of a switching unit and a heterogeneous accelerated computing pooling unit in a heterogeneous server with multiple accelerator cards according to one or more embodiments of the present disclosure.
FIG. 11 is a topology diagram of reset logic of a heterogeneous server with multiple accelerator cards according to one or more embodiments of the present disclosure.
FIG. 12 is a schematic flowchart of a resource link reconfiguration method based on a heterogeneous server with multiple accelerator cards according to one or more embodiments of the present disclosure.
FIG. 13 is a schematic structural diagram of a resource link reconfiguration apparatus based on a heterogeneous server with multiple accelerator cards according to one or more embodiments of the present disclosure.
FIG. 14 is a schematic structural diagram of an electronic device according to one or more embodiments of the present disclosure.
FIG. 15 is a schematic structural diagram of a non-transitory computer readable storage medium according to one or more embodiments of the present disclosure.

### DETAILED DESCRIPTION

In order to make the technical solutions and advantages of the present disclosure more clear, the technical solutions in the present disclosure will be clearly and completely described below in conjunction with the accompanying drawings in the present disclosure. Obviously, the embodiments described are only part, but not all, of the embodiments of the present disclosure. All other embodiments obtained by a person skilled in the art based on the embodiments of the present disclosure without paying an inventive labor fall within the protection scope of the present disclosure.

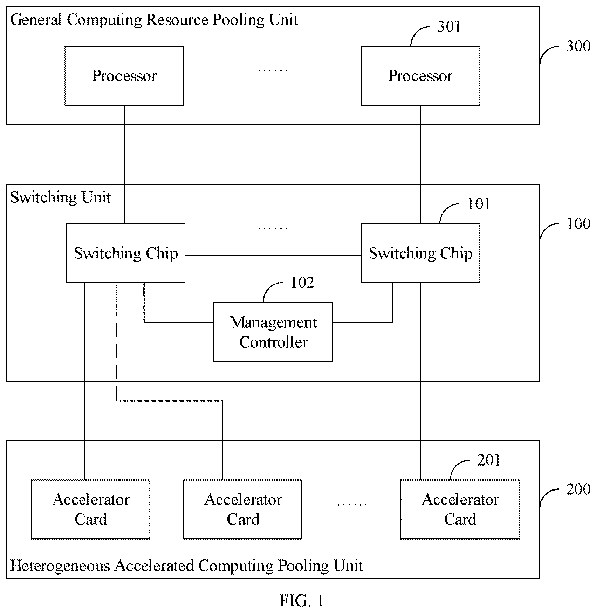

As shown in FIG. 1, a heterogeneous server with multiple accelerator cards in one or more embodiments of the present disclosure includes: a switching unit 100, a heterogeneous accelerated computing pooling unit 200 and a general computing resource pooling unit 300.

The general computing resource pooling unit 300 includes at least one processor 301, that is, a central processing unit (CPU), and one or more processors 301 form a general computing resource pool to provide general computing resources for computing tasks. The heterogeneous accelerated computing pooling unit 200 includes at least two accelerator cards 201, and two or more accelerator cards 201 form an accelerated computing resource pool to provide accelerated computing resources for the computing tasks. The at least one processor 301 and the at least two accelerator cards 201 are heterogeneous to each other. The at least two accelerator cards 201 can be classified into different types according to different computing tasks, for example, graphics processing units (GPUs) used for training graphic artificial intelligence models, or field programmable gate array (FPGA) chips for other types of operations.

The switching unit 100 includes a management controller 102 and at least two switching chips 101, which are high-performance input/output (I/O) switching chips. Any switching chip 101 is connected to at least one other switching chip 101 in the switching unit 100 through an internal port, the processor 301 is connected to an uplink port of the switching chip 101, and one or more of the at least two accelerator cards 201 are connected to a downlink port of the switching chip 101. It should be noted that ports on the switching chip 101 are all high-speed interfaces, and there is no logical division of the ports themselves. A port connecting two switching chips 101 is referred to as the internal port, a port connecting the processor 301 is referred to as the uplink port, and a port connecting the one or more accelerator cards 201 is referred to as the downlink port. Since the switching chip 101 is connected to the processor 301 and the one or more accelerator cards 201, and there is interconnection between the switching chips 101, high bandwidth, low latency, and multi-path interconnection between the accelerator cards 201 may be provided to meet computing power requirements of high-performance computing tasks. Similar computing resources in the resource pool may be integrated according to the computing tasks and category differences between processor resources for general computing with accelerator card resources for heterogeneous accelerated computing, which provides a prerequisite for the reorganization of different processor resources and accelerator card resources as needed to form resource links in hardware structure.

The management controller 102 is connected to each switching chip 101, and is configured to determine a resource link reconfiguration instruction according to a preset task resource requirement and chip information of each current switching chip 101, and send the resource link reconfiguration instruction to each target switching chip to form a resource link for completing a computing task corresponding to the task resource requirement. The task resource requirement refers to information of processor resources and accelerator card resources required to complete a computing task. The information includes a quantity of resources, for example, it takes four CPU resources, sixteen GPU resources and an allocation relationship to complete a large model training task, for example, four GPUs are allocated to one CPU. The chip information includes a switching chip identification (ID), a port ID of the switching chip 101, port bandwidth, a port rate and port status information. The port status information includes port connection information and port usage information. The port connection information includes whether the port is connected to the processor 301, the one or more accelerator cards 201 or other switching chips 101, and resource information (for example, model and performance parameters) of the connected processor 301 or one or more accelerator cards 201. The port usage information indicates whether the port has been allocated to a reconfiguration resource link corresponding to a certain computing task, if the port has been allocated to the reconfiguration resource link, the port is in use, and the processor 301 or the one or more accelerator cards 201 connected to the port is also in use; and if the port is not allocated to the reconfiguration resource link, it means that the processor 301 or the one or more accelerator cards 201 corresponding to the port is not used, and the port can be used for resource allocation of new computing tasks.

The resource link reconfiguration instruction includes each target switching chip identification (ID) included in a link and a target port ID on each target switching chip, so as to send the resource link reconfiguration instruction to the corresponding target switching chip, thereby establishing a communication protocol between the target switching chip and the port of the target switching chip on the resource link and a communication protocol between the processor 301 with the one or more accelerator cards 201 connected to the port, so that data processed by the processor 301 and the one or more accelerator cards 201 may be efficiently communicated through the target switching chip to complete the computing task.

In the heterogeneous server with multiple accelerator cards in the embodiments of the present disclosure, the switching chip 101 is connected to the processor 301 and the one or more accelerator cards 201, and there is also interconnection between the switching chips 101, and thus high bandwidth, low latency, and multi-path interconnection between the accelerator cards 201 may be provided to meet computing power requirements of high-performance computing tasks. Similar computing resources in the resource pool may be integrated according to the computing tasks and category differences between processor resources for general computing with accelerator card resources for heterogeneous accelerated computing, which provides a prerequisite for the reorganization of different processor resources and accelerator card resources as needed to form resource links in hardware structure. On this basis, the management controller 102 determines the resource link reconfiguration instruction according to the preset task resource requirement and the chip information of each current switching chip 101, and sends the resource link reconfiguration instruction to each target switching chip to form the resource link for completing the computing task corresponding to the task resource requirement. That is, the appropriate switching chip 101 and the port corresponding to the switching chip 101 are selected according to the task resource requirement and the chip information of each current switching chip 101, so that the network communication efficiency between multiple accelerator cards 201 and the network communication efficiency between the one or more accelerator cards 201 with the processor 301 are relatively high, so as to improve the task processing performance and achieve the purpose of improving the system computing performance by improving the communication efficiency when more accelerator cards 201 are integrated in a server system. Moreover, the resource link is dynamically reconstructed based on the preset task resource requirement and the chip information of each current switching chip 101, compared with the traditional fixed resource link, processor resources and accelerator card resources may be allocated more flexibly, thereby avoiding resource waste.

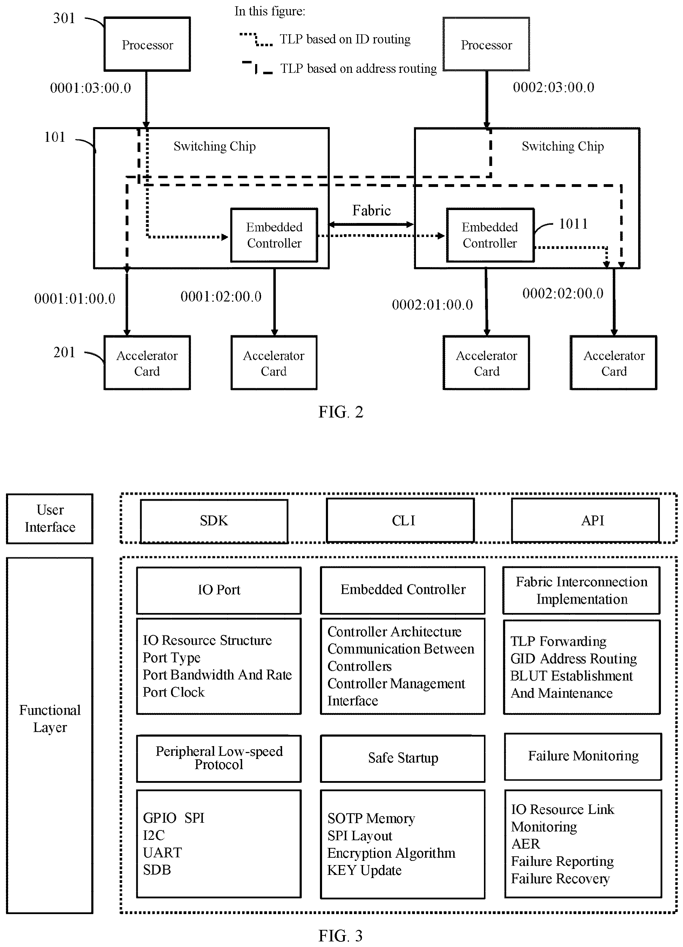

In some embodiments, in order to facilitate the management controller 102 to obtain the chip information of each current switching chip 101, as shown in FIG. 2, each switching chip 101 includes an embedded controller 1011. The embedded controller 1011 is configured to enumerate the chip information of the switching chip 101 where the embedded controller 1011 is located, and send the chip information to the management controller 102. Specifically, the specific process of enumeration is as follows: the embedded controller 1011 obtains the ID of the switching chip 101 where the embedded controller 1011 is located, each switching chip 101 has a unique ID, which may be a unique identification code of the switching chip 101; and obtains a number of each port on the switching chip 101. The ID of the switching chip 101 and the number of the port are spliced to form the ID of each port, and the ID of the port is a global ID. Each port ID of each switching chip 101 is unique. As shown in FIG. 2, there are two switching chips 101, each of the two switching chips 101 has three ports, and the switching chip IDs of the two switching chips 101 are 0001 and 0002. For each port of the switching chip 101 with the switching chip ID of 0001, port IDs corresponding to the port are 0001:01:00.0, 0001:02:00.0 and 0001:03:00.0; and for each port of the switching chip 101 with the switching chip ID of 0002, port IDs corresponding to the port are 0002:01:00.0, 0002:02:00.0 and 0002:03:00.0. For each port, the embedded controller 1011 determines whether the port is connected to the one or more accelerator cards 201, the processor 301 or the ports of other switching chips 101; and if the port is connected to the one or more accelerator cards 201, the processor 301 or the ports of other switching chips 101, resource information of the one or more accelerator cards 201 or processor 301 may also be obtained. The port bandwidth and the port rate belong to technical parameters of switching chip 101, which may be obtained by the embedded controller 1011 based on the technical parameters of switching chip 101.

In the embodiments of the present disclosure, the embedded controller 1011 in each switching chip 101 actively uploads the chip information to the management controller 102, and it is not necessary for the management controller 102 to actively access the switching chip 101 to obtain the corresponding chip information, thereby reducing the occupation of the communication network in the switching unit 100 and improving the communication efficiency in computing task processing.

Specifically, after receiving the chip information sent by each embedded controller 1011, the management controller 102 has a global control over the communication network topology formed by each switching chip 101 in the switching unit 100, and thus a global information table including the chip information of each switching chip 101 may be maintained. Based on the global information table, it is possible to enumerate virtual bridges of the switching unit 100, thereby uniformly managing the accelerator card resources and processor resources connected to the switching chip 101.

It should be noted that after receiving the resource link reconfiguration instruction issued by the management controller 102, the embedded controller 1011 in each target switching chip is further configured to change the port usage information of the corresponding port in the target switching chip, and send updated chip information to the management controller 102, so that the management controller 102 may update the chip information of each switching chip 101, that is, update the above global information table.

In some embodiments, the management controller 102 is configured to search for a target switching chip identification (ID) and a target port ID on the target switching chip based on the preset task resource requirement, a switching chip ID, a port ID of the switching chip, port bandwidth, a port rate, port connection information and port usage information for minimizing link communication overhead, and generate the resource link reconfiguration instruction including the target switching chip ID and the target port ID on the target switching chip. Specifically, the management controller 102 may forward configuration transaction layer packets (TLPs) of a route based on a global address ID, and establish destination look up tables (DLUTs) to realize TLP routing with complex topologies. Minimizing the link communication overhead may be minimum data transmission delay. For a purpose of minimizing data transmission delay, unallocated ports of switching chips 101 are first searched according to the task resource requirement, the switching chip ID, the port ID of the switching chip, the port connection information of the switching chip 101 and the port usage information, and then the target switching chip ID and the target port ID on each target switching chip that may minimize the data transmission delay of the resource link may be searched according to the port bandwidth and the port rate. The specific search algorithm is similar to the routing algorithm of network routing, and it only needs to be written into the management controller 102 in advance.

The management controller 102 may not only reconstruct the resource link by searching for the target switching chip ID and the target port ID on each target switching chip according to the preset routing algorithm, but also reconstruct the resource link according to the target switching chip ID selected by the user and the target port ID on each target switching chip. Therefore, in some embodiments, the management controller 102 is further configured to display the preset task resource requirement, a switching chip identification (ID), a port ID of the switching chip, port bandwidth, a port rate, port connection information and port usage information on a display device through a graphical interface; and receive the resource link reconfiguration instruction input through the graphical interface. Specifically, the management controller 102 displays each switching chip ID, the port ID of the switching chip, the port bandwidth, the port rate, the port connection information of switching chip 101 and the port usage information on a display interface in the form of a network topology diagram according to the obtained switching chip ID, the port ID of the switching chip, the port bandwidth, the port rate, the port connection information of switching chip 101 and the port usage information; a user may intuitively see which ports of the switching chips 101 have been allocated to the resource links, and select a resource link that meets the task resource requirement from unallocated ports. Of course, the user may select a resource link with the minimum communication overhead according to the manual calculation.

As shown in FIG. 3, compared with the management controller in a traditional heterogeneous resource server system with fixed links, the management controller 102 in the above embodiments may communicate with the embedded controller 1011 in the switching chip 101, and obtain relevant information of the port (an IO port in FIG. 3) of the switching chip 101 in real time. Further, the management controller 102 may further configure attributes of the port, including: a type of the port (the uplink port, the internal port or the downlink port), bifurcation settings of the port, clock settings of the port, resource reservation settings of the port (the one or more accelerator cards 201, the processor 301 and other switching chips 101 are not connected); and realize TLP forwarding, global identification (GID) address routing and DLUT establishment and maintenance based on a Fabric connection between switching chips 101, so as to search for the target switching chip ID corresponding to the resource link and the port ID on the target switching chip. Of course, the management controller 102 also has other functions in the traditional heterogeneous resource server system with fixed links, for example, providing rich peripheral low-speed protocols such as universal asynchronous receiver/transmitter (UART) GPIO and general-purpose input/output ports (GPIO), supporting safe startup, ensuring chip safety and supporting fault monitoring mechanisms such as advanced error reporting (AER) and real-time monitoring of I/O resource health status.

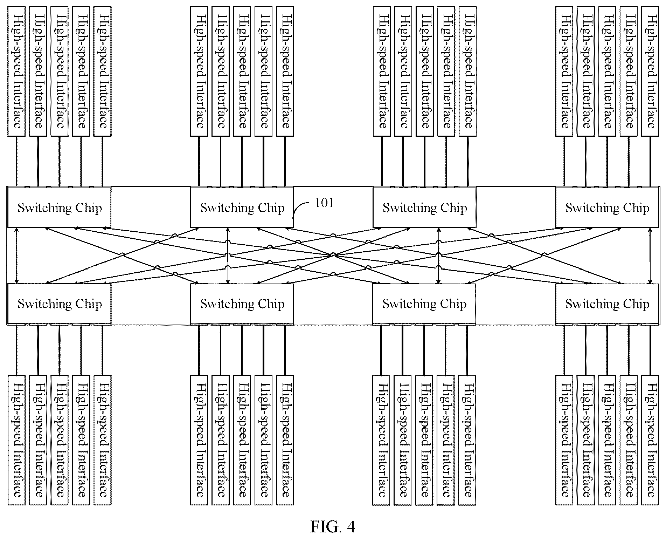

In some embodiments, as shown in FIG. 4, the switching unit 100 includes two switching chipsets. In FIG. 4, an upper row of switching chips 101 is one group, a lower row of switching chips 101 is another group, and each of the two switching chipsets includes at least one switching chip 101. In FIG. 4, each of the two switching chipsets includes four switching chips 101, and a number of switching chips 101 in each switching chipset is less than a total number of ports of the switching chips 101. Any switching chip 101 in a first switching chipset is connected to each switching chip 101 in the second switching chipset through an internal port, and any switching chip 101 in the second switching chipset is connected to each switching chip 101 in the first switching chipset through the internal port, that is, any switching chip 101 in the same group is fully connected to all switching chips 101 in another group, while switching chips in the same switching chipset are not directly connected. In the remaining ports of all switching chips 101, at least one port is used as the uplink port to connect the processor 301, and at least two ports are used as the downlink ports to connect the accelerator cards 201. Specifically, the remaining ports of all switching chips 101 are connected to the processor 301 or the accelerator cards 201. The server system in the embodiments of the present disclosure may not only realize that a plurality of processors 301 share the accelerator card resource pool, but also realize that a plurality of heterogeneous accelerator cards 201 are integrated in a single server system.

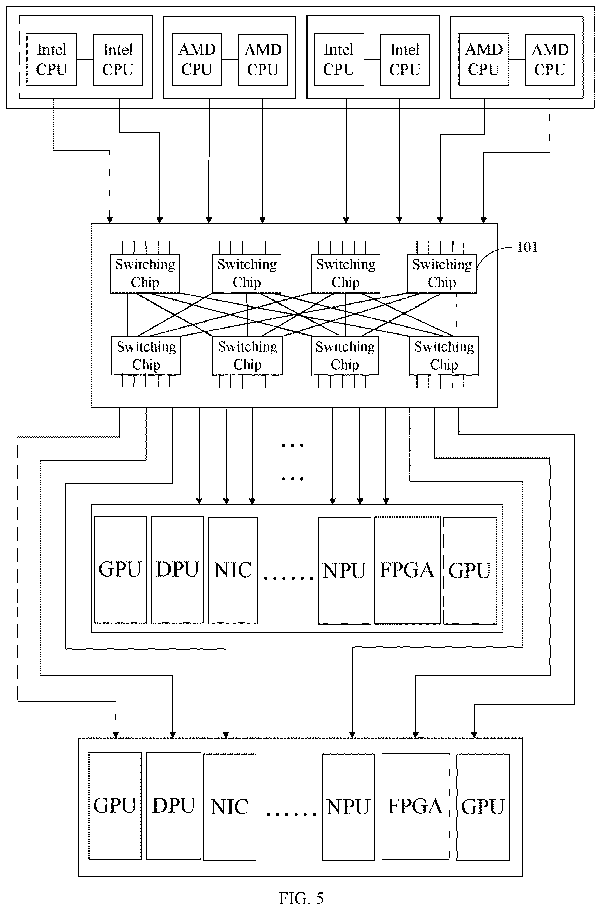

Further, as shown in FIG. 5, each switching chipset includes four switching chips 101, and each of the four switching chips 101 has nine ports. Any switching chip 101 in the first switching chipset is respectively connected to the four switching chips 101 in the second switching chipset through four internal ports, and any switching chip 101 in the second switching chipset is respectively connected to the four switching chips 101 in the first switching chipset through the four internal ports, that is, each switching chip 101 provides five external ports. Eight of the remaining forty ports of all switching chips 101 are used as the uplink ports to connect eight processors 301, and the remaining thirty-two ports are used as the downlink ports to connect thirty-two accelerator cards 201. FIG. 5 is a schematic structural diagram of a heterogeneous server with multiple accelerator cards of eight processors 301 and thirty-two accelerator cards. The switching chips 101 are designed in two groups, and the switching chips 101 between groups are fully connected through internal ports. In the remaining forty ports, eight uplink ports are connected to eight processors 301, and thirty-two downlink ports are connected to thirty-two accelerator cards 201. The thirty-two accelerator cards 201 may be artificial intelligence models that may complete large-scale graphics training, for example, thirty-two GPUs.

The thirty-two accelerator cards 201 and the eight processors 301 may all be different types of devices. As shown in FIG. 5, the accelerator cards 201 include GPUs, FPGAs and neural processing units (NPUs) to complete different types of computing tasks at the same time; and the processors 301 include AMD CPUs and Intel CPUs, which may complete computing tasks developed under different CPU architectures and are more flexible in processing computing tasks.

In some embodiments, the switching unit 100 includes a plurality of switching chips 101, and a number of switching chips 101 is less than a number of ports of the switching chips 101. Any switching chip 101 is connected to remaining switching chips 101 through the internal ports, that is, any switching chip 101 is fully connected to other switching chips 101. In the remaining ports of all switching chips 101, at least one port is used as the uplink port to connect the processor 301, and at least two ports are used as the downlink ports to connect the accelerator cards 201. In the embodiments, all the switching chips 101 are fully connected. While the server system integrates multiple accelerator cards 201, the internal bus exchange of the server is taken as the core, the communication bandwidth and efficiency of the accelerator cards are guaranteed by the non-blocking internal bus exchange, thereby reducing the communication delay, improving the artificial intelligence parallel ability, effectively solving the problem of insufficient computing power of a single accelerator card, and further improving the computing power of the system.

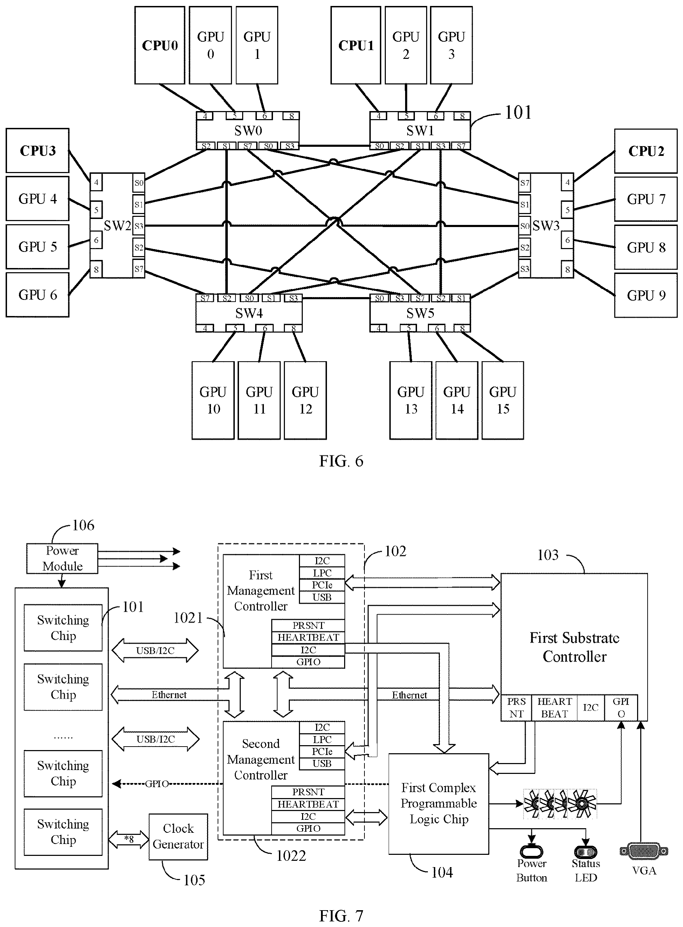

Further, as shown in FIG. 6, the switching unit includes six switching chips 101, namely SW0 to SW5 in FIG. 6. Each of the six switching chips 101 has nine ports, and any switching chip 101 is connected to the remaining switching chips 101 through five internal ports. In the remaining ports of all switching chips 101, sixteen ports are used as the downlink ports to connect the accelerator cards, namely GPU0 to GPU15 in FIG. 6; and the remaining at least four ports are used as the uplink ports to connect four processors, namely CPU0 to CPU3. This embodiment is a schematic structural diagram of a heterogeneous server with multiple accelerator cards of four processors 301 and sixteen accelerator cards 201, and the switching chips 101 form a fully connected communication topology network.

In some embodiments, at least one processor 301 is connected to the uplink ports of different switching chips 101. For example, CPU3 in FIG. 6 may be replaced by CPU0, that is, CPU0 is respectively connected to the port of SW0 and the port of SW2. In the case where the number of resources in processor 301 is relatively small, one processor 301 may be connected to the uplink ports of two or more switching chips 101, and a link passing through a smaller number of switching chips 101 may be selected during resource link reconfiguration, thereby improving the communication efficiency and improving the processing performance of computing tasks.

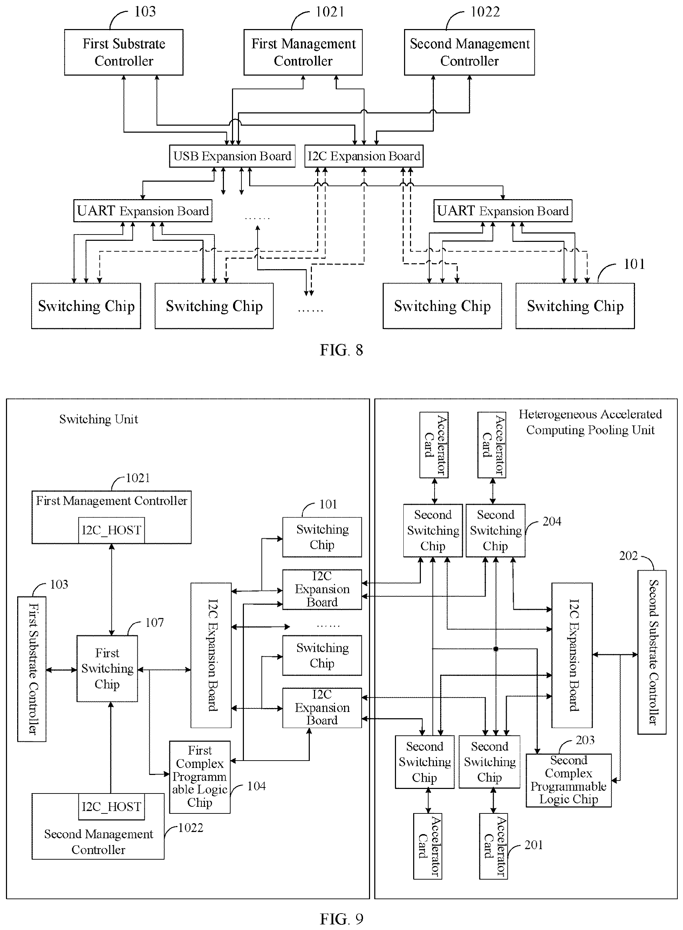

As shown in FIG. 7 and FIG. 8, the switching unit 100 further includes a first substrate controller 103 and a first complex programmable logic chip 104. The first substrate controller 103 is connected to the first complex programmable logic chip 104 and the management controller 102, and the first complex programmable logic chip 104 is connected to the management controller 102 and the switching chips 101. Of course, the switching unit 100 further includes a clock generator 105 and a power module 106. The power module 106 supplies power to the switching chips 101, the management controller 102, the first substrate controller 103, the first complex programmable logic chip 104 and the clock generator 105. It should be noted that the port connecting the one or more accelerator cards 201 and the processor 301 to the switching chip 101 and the port interconnected between the switching chips 101 are high-speed interfaces for data transmission, and the management controller 102, the first substrate controller 103, and the first complex programmable logic chip 104 are respectively connected to the switching chips 101 through control interfaces (for example, low-speed interfaces).

The first complex programmable logic chip 104 is configured to control power on/off timing of the management controller 102 and the switching chips 101. Specifically, the power on/off timing of the management controller 102 and the switching chips 101 is controlled in combination with the clock generator 105.

The first substrate controller 103 is configured to write the preset task resource requirement into the management controller 102 and receive link information of the resource link fed back by the management controller. The link information includes a processor identification (ID) occupied by the resource link, an accelerator card ID, a switching chip ID and a port ID on the switching chip. The task resource requirement is input into the first substrate controller 103 by an application, and then written into the management controller 102 by the first substrate controller 103. After receiving the link information of the resource link, the first substrate controller 103 feeds back the link information to a front-end application.

Specifically, as shown in FIG. 7 and FIG. 8, the management controller 102 and the first substrate controller 103 are connected to the switching chips 101 based on various interconnection links such as a UART expansion board, a universal serial bus (USB) expansion board and an inter-integrated circuit (I2C) expansion board, thereby establishing an internal management network of the high-performance switching unit 100.

Further, as shown in FIG. 7 to FIG. 9, the management controller 102 includes a first management controller 1021 and a second management controller 1022 which are mutually redundant. The first management controller 1021 is connected to the second management controller 1022 through a first switching chip 107, and the first switching chip 107 is connected to the first substrate controller 103. The first substrate controller 103 is further configured to receive fault information sent by the first management controller 1021 or the second management controller 1022. After receiving the fault information from the first management controller 1021, the first substrate controller 103 controls the first switching chip 107 to disconnect the first management controller 1021 from the switching chips 101, switch the second management controller 1022 to be connected to the switching chips 101; or after receiving the fault information from the second management controller 1022, the first substrate controller 103 controls the first switching chip 107 to disconnect the second management controller 1022 from the switching chips 101, and switch the first management controller 1021 to be connected to the switching chips 101. In the actual hardware structure, due to the relatively large number of switching chips 101 and accelerator cards 201, the first management controller 1021 and the second management controller 1022 are connected to the switching chips 101 through I2C expansion boards, and the switching chips 101 are connected to the accelerator cards 201 through the I2C expansion boards.

In the embodiments, the first management controller 1021 and the second management controller 1022 are designed to be redundant with each other, the first substrate controller 103 will write the task resource requirement into the first management controller 1021 and the second management controller 1022, and when one management controller 102 fails, the other management controller 102 will be switched to continue running, thereby ensuring the stability of the server system.

In some embodiments, as shown in FIG. 9, the heterogeneous accelerated computing pooling unit 200 further includes a second substrate controller 202 and a second complex programmable logic chip 203. The second substrate controller 202 is connected to the second complex programmable logic chip 203 and the accelerator cards 201.

The second complex programmable logic chip 203 is configured to control power on/off timing of the accelerator cards 201.

The second substrate controller 202 is configured to obtain status information of the accelerator cards 201.

Further, the heterogeneous accelerated computing pooling unit 200 further includes second switching chips 204, and the accelerator cards 201 are connected to the second substrate controller 202, the second complex programmable logic chip 203 and the switching chips 101 through the second switching chips 204. The second substrate controller 202 is configured to control the second switching chips 204 to switch connections between the accelerator cards 201 with the second substrate controller 202. In the case where the number of accelerator cards 201 is relatively large, connections between the accelerator cards 201 allocated to the resource link with the second substrate controller 202 are controlled to obtain the status information of the accelerator cards 201.

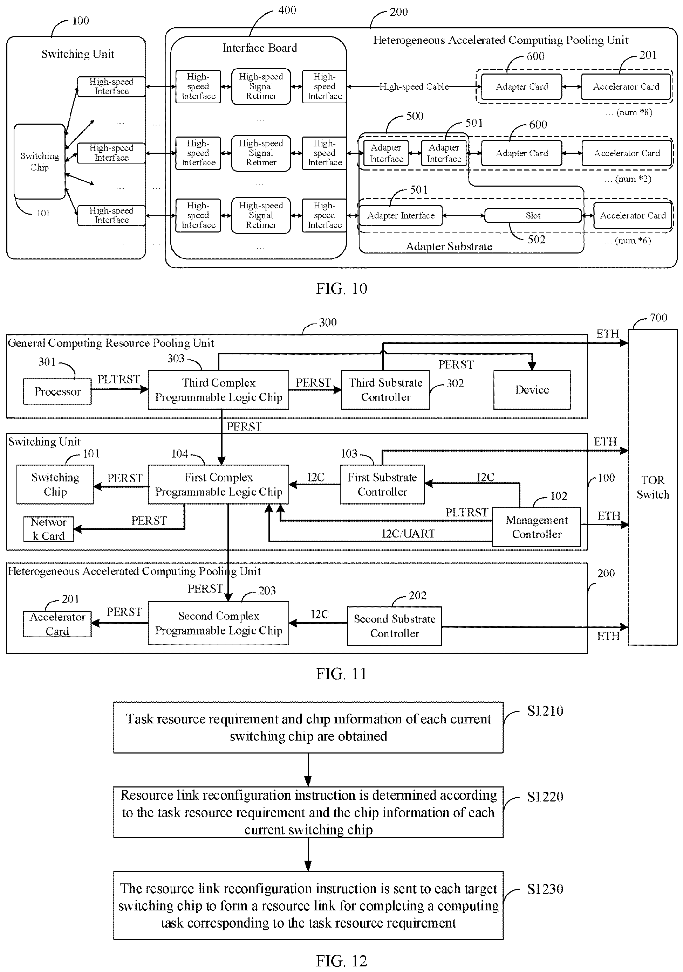

In some embodiments, as shown in FIG. 10, the heterogeneous accelerated computing pooling unit 200 further includes an interface board 400 and an adapter substrate 500, where the adapter substrate 500 is provided with adapter interfaces 501 and a slot 502. The interface board 400 is a high-speed interface board, and is used for connections between the accelerator cards 201 with the switching chip 101. Each of the connections of the interface board 400 includes two high-speed interfaces and a high-speed signal retimer. The two high-speed interfaces are respectively connected to the high-speed signal retimer. One of the two high-speed interfaces is used to connect the accelerator card 201, and the other is used to connect the switching chip 101. In practical applications, in the case where the number of accelerator cards 201 and switching chips 101 is relatively large, considering the actual size and spatial layout of the server chassis, a plurality of switching chips 101 and accelerator cards 201 may be connected in the following three connection modes.

Mode 1: the accelerator card 201 is connected to the interface board 400 through an adapter card 600, and the interface board 400 is connected to the downlink port of the switching chip 101. Specifically, the accelerator card 201 is connected to the high-speed interface near the heterogeneous accelerated computing pooling unit 200 on the interface board 400 through the adapter card 600, and the high-speed interface on the interface board 400 near the switching unit 100 is connected to the switching chip 101.

Mode 2: the accelerator card 201 is connected to the adapter interface 501 in the adapter substrate 500 through the adapter card 600, the adapter interface 501 is connected to the interface board 400, and the interface board 400 is connected to the downlink port of the switching chip 101. Specifically, the adapter interface 501 is connected to the high-speed interface near the heterogeneous accelerated computing pooling unit 200 on the interface board 400, and the high-speed interface on the interface board 400 near the switching unit 100 is connected to the switching chip 101.

Mode 3: the accelerator card 201 is connected to the slot 502, the slot 502 is connected to the adapter interface 501, the adapter interface 501 is connected to the interface board 400, and the interface board 400 is connected to the downlink port of the switching chip 101. Specifically, the adapter interface 501 is connected to the high-speed interface near the heterogeneous accelerated computing pooling unit 200 on the interface board 400, and the high-speed interface on the interface board 400 near the switching unit 100 is connected to the switching chip 101.

The flexible layout of the switching chips 101 and the accelerator cards 201 in the heterogeneous server with multiple accelerator cards may be realized through the above three connection modes.

In some embodiments, as shown in FIG. 11, the general computing resource pooling unit 300 further includes a third substrate controller 302 and a third complex programmable logic chip 303. The third substrate controller 302 is connected to the third complex programmable logic chip 303 and the processor 301.

The third complex programmable logic chip 303 is configured to control power on/off timing of the processor 301.

The third substrate controller 302 is configured to obtain status information of the processor 301.

In some embodiments, as shown in FIG. 11, the switching unit 100 further includes a first substrate controller 103 and a first complex programmable logic chip 104, where the first complex programmable logic chip 104 is respectively connected to the switching chip 101, the first substrate controller 103 and the management controller 102, and the management controller 102 is connected to the first substrate controller 103.

The heterogeneous accelerated computing pooling unit 200 further includes a second substrate controller 202 and a second complex programmable logic chip 203, where the second complex programmable logic chip 203 is respectively connected to the accelerator card 201 and the second substrate controller 202.

The general computing resource pooling unit 300 further includes a third substrate controller 302 and a third complex programmable logic chip 303, where the third complex programmable logic chip 303 is respectively connected to the processor 301 and the third substrate controller 302.

The first substrate controller 103, the second substrate controller 202, the third substrate controller 302 and the management controller 102 are all connected to an external top of rack (TOR) switch 700 through Ethernet to interact with external applications through the TOR switch 700.

In the embodiments, the third complex programmable logic chip 303 is connected to the first complex programmable logic chip 104, and the first complex programmable logic chip 104 is connected to the second complex programmable logic chip 203. Each complex programmable logic chip is configured to control power on/off timing of the unit where the complex programmable logic chip is located. First, the second complex programmable logic chip 203 controls the heterogeneous accelerated computing pooling unit 200 to be powered on, specifically, the second complex programmable logic chip 203 controls the accelerator card 201 and the second substrate controller 202 to be powered on first; then, the first complex programmable logic chip 104 controls the switching unit 100 to be powered on, specifically, the first complex programmable logic chip 104 controls the switching chip 101 and the first substrate controller 103 to be powered on; and finally, the third complex programmable logic chip 303 controls the general computing resource pooling unit 300 to be powered on, specifically, the third complex programmable logic chip 303 controls the processor 301 and the third substrate controller 302 to be powered on to ensure the correctness of the timing of the whole server system. Corresponding to a certain resource link, the accelerator card 201, the switching chip 101 and processor 301 are powered on in sequence, and a power off sequence is opposite to a power on sequence. In the case of an emergency (for example, a certain resource link fails), each complex programmable logic chip performs reset and restart actions or power-off operations on each device in the corresponding link to ensure the stability and reliability of other links.

In practical applications, the management controller 102 of the above embodiments establishes a business-aware resource reconfiguration decision system through software definition, realizes functions such as dynamic allocation of uplink and downlink of resource links, link topology switching and dynamic reconfiguration of data links, completes intelligent reconfiguration of hardware resources, and realizes pooling and centralized management of processor resources and accelerator card resources, thereby realizing dynamic adjustment, flexible combination and intelligent allocation, improving the calculation efficiency and response rate of the whole system, realizing the intelligence and high efficiency of heterogeneous computing, and enabling the heterogeneous server with multiple accelerator cards in the above embodiments to meet application requirements of the current mainstream artificial intelligence large models and other large-scale computing business scenarios. In the heterogeneous server with multiple accelerator cards of the above embodiments, a super-large scale computing cluster may be realized between multiple devices through the whole machine cluster of the system network, and the cluster mode is implemented through Ethernet switches.

The present disclosure further provides a resource link reconfiguration method, which is implemented based on the heterogeneous server with multiple accelerator cards in the above embodiments. The method is applied to a management controller, as shown in FIG. 12, the method includes following steps.

Step S1210, a task resource requirement and chip information of each current switching chip are obtained. Specifically, referring to FIG. 1 and FIG. 2, the management controller 102 obtains the task resource requirement and the chip information of each current switching chip 101. The chip information of each current switching chip 101 may be obtained from an embedded controller 1011 in the switching chip 101. After receiving the chip information sent by each embedded controller 1011, the management controller 102 has a global understanding of the communication network topology formed by each switching chip 101 in the switching unit 100, and thus a global information table including the chip information of each switching chip 101 may be maintained. Based on the global information table, it is possible to enumerate virtual bridges of the switching unit 100, thereby uniformly managing the accelerator card resources and processor resources connected to the switching chip 101.

Step S1220, a resource link reconfiguration instruction is determined according to the task resource requirement and the chip information of each current switching chip. Specifically, the management controller 102 determines the resource link reconfiguration instruction based on a preset task resource requirement, a switching chip ID, port bandwidth, a port rate, port connection information and port usage information.

Step S1230, the resource link reconfiguration instruction is sent to each target switching chip to form a resource link for completing a computing task corresponding to the task resource requirement. Specifically, the management controller 102 sends the resource link reconfiguration instruction including each target switching chip ID and a target port ID on each target switching chip to the target switching chip, so as to establish a communication protocol between the target switching chip and the port of the target switching chip on the resource link and a communication protocol between the processor 301 and the accelerator card 201 connected to the port, and thus data processed by the processor 301 and the accelerator card 201 may be efficiently communicated through the target switching chip to complete the computing task.

The resource link reconfiguration method of the present disclosure is implemented based on the above heterogeneous server with multiple accelerator cards, the switching chip 101 is connected to the processor 301 and the accelerator card 201, and there is also interconnection between the switching chips 101, and thus high bandwidth, low latency, and multi-path interconnection between the accelerator cards 201 may be provided to meet computing power requirements of high-performance computing tasks. Similar computing resources in the resource pool may be integrated according to the computing tasks and category differences between processor resources for general computing with accelerator card resources for heterogeneous accelerated computing, which provides a prerequisite for the reorganization of different processor resources and accelerator card resources as needed to form resource links in hardware structure. On this basis, the management controller 102 determines the resource link reconfiguration instruction according to the preset task resource requirement and the chip information of each current switching chip 101, and sends the resource link reconfiguration instruction to each target switching chip to form the resource link for completing the computing task corresponding to the task resource requirement. That is, the appropriate switching chip 101 and the port corresponding to the switching chip 101 are selected according to the task resource requirement and the chip information of each current switching chip 101, so that the network communication efficiency between multiple accelerator cards 201 and the network communication efficiency between the accelerator card 201 and the processor 301 are relatively high, so as to improve the task processing performance and achieve the purpose of improving the system computing performance by improving the communication efficiency when more accelerator cards 201 are integrated in a server system. Moreover, the resource link is dynamically reconstructed based on the preset task resource requirement and the chip information of each current switching chip 101, compared with the traditional fixed resource link, processor resources and accelerator card resources may be allocated more flexibly, thereby avoiding resource waste.

The step S1220 specifically includes: searching for a target switching chip identification (ID) and a target port ID on the target switching chip based on the preset task resource requirement, a switching chip ID, a port ID of the switching chip, port bandwidth, a port rate, port connection information and port usage information for minimizing link communication overhead, and generating the resource link reconfiguration instruction including the target switching chip ID and the target port ID on the target switching chip. Specifically, referring to FIG. 1 and FIG. 7, the management controller 102 may forward configuration transaction layer packets (TLPs) of a route based on a global address ID, and establish destination look up tables (DLUTs) to realize TLP routing with complex topologies. Minimizing the link communication overhead may be minimum data transmission delay. For a purpose of minimizing data transmission delay, unallocated ports of switching chips 101 are first searched according to the task resource requirement, the switching chip ID, the port ID of the switching chip, the port connection information and the port usage information, and then the target switching chip ID and the target port ID on each target switching chip that may minimize the data transmission delay of the resource link may be searched according to the port bandwidth and the port rate. The specific search algorithm is similar to the routing algorithm of network routing, and it only needs to be written into the management controller 102 in advance.

The above step S1220 may also be implemented in the following way. The step S1220 includes:
displaying the preset task resource requirement, a switching chip identification (ID), a port ID of the switching chip, port bandwidth, a port rate, port connection information and port usage information on a display device through a graphical interface; and
receiving the resource link reconfiguration instruction input through the graphical interface.

Specifically, referring to FIG. 1 and FIG. 7, the management controller 102 displays the preset task resource requirement, the switching chip ID, the port connection information of switching chip 101 and the port usage information on the display device through the graphical interface, and receives the resource link reconfiguration instruction input through the graphical interface. Specifically, the management controller 102 displays each switching chip ID, the port ID of the switching chip, the port bandwidth, the port rate, the port connection information of switching chip 101 and the port usage information on a display interface in the form of a network topology diagram according to the obtained switching chip ID, the port ID of the switching chip, the port bandwidth, the port rate, the port connection information of switching chip 101 and the port usage information; a user may intuitively see which ports of the switching chips 101 have been allocated to the resource links, select a resource link that meets the task resource requirement from unallocated ports, and input the resource link reconfiguration instruction to the management controller 102 through the graphical interface. Of course, the user may select a resource link with the minimum communication overhead according to the manual calculation.

Hereinafter, a resource link reconfiguration apparatus provided in the present disclosure will be described. The resource link reconfiguration apparatus described below and the resource link reconfiguration method described above may refer to each other correspondingly.

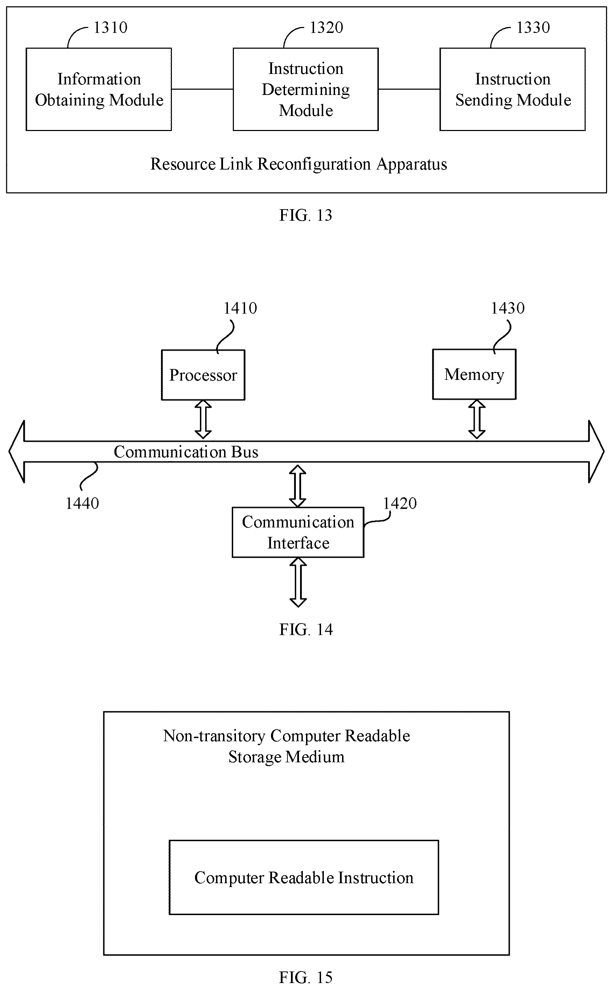

The resource link reconfiguration apparatus of the present disclosure is implemented based on the above heterogeneous server with multiple accelerator cards. The apparatus is applied to a management controller in the heterogeneous server with multiple accelerator cards. As shown in FIG. 13, the apparatus includes:
an information obtaining module 1310 configured to obtain a task resource requirement and chip information of each current switching chip;
an instruction determining module 1320 configured to determine a resource link reconfiguration instruction according to the task resource requirement and the chip information of each current switching chip; and
an instruction sending module 1330 configured to send the resource link reconfiguration instruction to each target switching chip to form a resource link for completing a computing task corresponding to the task resource requirement.

The resource link reconfiguration apparatus of the present disclosure is implemented based on the above heterogeneous server with multiple accelerator cards, the switching chip is connected to the processor and the accelerator card, and there is also interconnection between the switching chips, and thus high bandwidth, low latency, and multi-path interconnection between the accelerator cards may be provided to meet computing power requirements of high-performance computing tasks. Similar computing resources in the resource pool may be integrated according to the computing tasks and category differences between processor resources for general computing with accelerator card resources for heterogeneous accelerated computing, which provides a prerequisite for the reorganization of different processor resources and accelerator card resources as needed to form resource links in hardware structure. On this basis, the management controller determines the resource link reconfiguration instruction according to the preset task resource requirement and the chip information of each current switching chip, and sends the resource link reconfiguration instruction to each target switching chip to form the resource link for completing the computing task corresponding to the task resource requirement. That is, the appropriate switching chip and the port corresponding to the switching chip are selected according to the task resource requirement and the chip information of each current switching chip, so that the network communication efficiency between multiple accelerator cards and the network communication efficiency between the accelerator card and the processor are relatively high, so as to improve the task processing performance and achieve the purpose of improving the system computing performance by improving the communication efficiency when more accelerator cards are integrated in a server system. Moreover, the resource link is dynamically reconstructed based on the preset task resource requirement and the chip information of each current switching chip, compared with the traditional fixed resource link, processor resources and accelerator card resources may be allocated more flexibly, thereby avoiding resource waste.

Optionally, the instruction determining module 1320 is specifically configured to search for a target switching chip identification (ID) and a target port ID on the target switching chip based on the preset task resource requirement, a switching chip ID, a port ID of the switching chip, port bandwidth, a port rate, port connection information and port usage information for minimizing link communication overhead, and generate the resource link reconfiguration instruction including the target switching chip ID and the target port ID on the target switching chip.

Optionally, the instruction determining module 1320 is specifically configured to display the preset task resource requirement, a switching chip identification (ID), a port ID of the switching chip, port bandwidth, a port rate, port connection information and port usage information on a display device through a graphical interface; and receive the resource link reconfiguration instruction input through the graphical interface.

FIG. 14 is a schematic diagram showing physical structure of an electronic device. As shown in FIG. 14, the electronic device may include a processor 1410, a communication interface 1420, a memory 1430 and a communication bus 1440. The processor 1410, communication interface 1420 and memory 1430 communicate with each other through the communication bus 1440. The processor 1410 may call logical instructions in the memory 1430 to execute the resource link reconfiguration method of any one or more preceding embodiments.

In addition, the logical instructions in the above memory 1430 may be implemented in the form of software functional units and may be stored in a computer readable storage medium while being sold or used as a separate product. Based on this understanding, the technical solutions of the present disclosure in essence, or the parts that contributes to the prior art or the parts of the technical solutions may be embodied in the form of software product, which is stored in a storage medium and includes several instructions to cause a computer device (for example, a personal computer, a server, a network device, and the like) to perform all or part of the steps of the method described in various embodiments of the present disclosure. The above storage medium includes various media that can store program codes, for example, U disk, mobile hard disk, read-only memory (ROM), random access memory (RAM), magnetic disk, and compact disk.

On the other hand, the present disclosure further provides a computer readable instruction product including computer readable instructions that can be stored on a non-transitory computer readable storage medium, when the computer readable instructions are executed by a processor, the computer can perform the resource link reconfiguration method of any one or more preceding embodiments.

On the other hand, the present disclosure further provides a non-transitory computer readable storage medium, as shown in FIG. 15, on which computer readable instructions are stored, when executed by a processor, the computer readable instructions cause the processor to perform the resource link reconfiguration method of any one or more preceding embodiments. The method is implemented based on the heterogeneous server with multiple accelerator cards of any one or more preceding embodiments, and is applied to a management controller.

The apparatus embodiments described above are only schematic. Herein, the units explained as separate components may be or may not be physically separated, and the components displayed as units may be or may not be physical units, that is, they may be located in one place or may be distributed across multiple network units. A part or all of modules may be selected according to actual needs to achieve the purpose of the solutions in these embodiments. A person skilled in the art may understand and implement these embodiments without creative efforts.

From the above description of the implementations, those skilled in the art may clearly understand that various implementations may be implemented by means of software and a necessary general hardware platform, and of course, may also be implemented through hardware. Based on such understanding, the above technical solutions essentially or the portion thereof contributing to the prior art may be embodied in the form of a software product. The computer software product may be stored in a computer readable storage medium, such as, an ROM/RAM, a magnetic disk, an optical disk, and the like, and includes several instructions such that a computer device (which may be a personal computer, a server, or a network device, and the like) performs the methods described in various embodiments or certain portions of the embodiments.

Finally, it should be noted that the above embodiments are only used to describe, not to limit, the technical solutions of the present disclosure. Although the present disclosure has been described in detail with reference to the above embodiments, a person skilled in the art should understand that a person skilled in the art may still modify the technical solutions recorded in the above various embodiments or replace a part of technical features in the technical solutions equally. However, these modifications or replacements do not make the essence of the corresponding technical solutions separate from the spirit and scope of the technical solutions of the various embodiments of the present disclosure.

## Claims

1. A heterogeneous server with multiple accelerator cards, comprising: a switching unit, a heterogeneous accelerated computing pooling unit and a general computing resource pooling unit, wherein
the general computing resource pooling unit comprises at least one processor, and the heterogeneous accelerated computing pooling unit comprises at least two accelerator cards, wherein the at least one processor and the at least two accelerator cards are heterogeneous to each other;
the switching unit comprises a management controller and at least two switching chips, wherein any switching chip in the at least two switching chips is connected to at least one other switching chip in the switching unit through an internal port, the at least one processor is connected to an uplink port of the switching chip, and one or more of the at least two accelerator cards are connected to a downlink port of the switching chip; and
the management controller is connected to each of the at least two switching chips, and is configured to determine a resource link reconfiguration instruction according to a preset task resource requirement and chip information of each current switching chip, and send the resource link reconfiguration instruction to each target switching chip to form a resource link for completing a computing task corresponding to the task resource requirement.

2. The heterogeneous server with multiple accelerator cards according to claim 1, wherein each of the at least two switching chips comprises an embedded controller, wherein the embedded controller is configured to enumerate chip information of the switching chip where the embedded controller is located, and send the chip information to the management controller.

3. The heterogeneous server with multiple accelerator cards according to claim 1, wherein the management controller is configured to search for a target switching chip identification (ID) and a target port ID on the target switching chip based on the preset task resource requirement, a switching chip ID, a port ID of the switching chip, port bandwidth, a port rate, port connection information and port usage information for minimizing link communication overhead, and generate the resource link reconfiguration instruction comprising the target switching chip ID and the target port ID on the target switching chip.

4. The heterogeneous server with multiple accelerator cards according to claim 1, wherein the management controller is further configured to display the preset task resource requirement, a switching chip identification (ID), a port ID of the switching chip, port bandwidth, a port rate, port connection information and port usage information on a display device through a graphical interface, and receive the resource link reconfiguration instruction input through the graphical interface.

5. The heterogeneous server with multiple accelerator cards according to any one of claims 1 to 4, wherein the switching unit comprises two switching chipsets, each of the two switching chipsets comprises at least one switching chip, and a number of switching chips in the switching chipset is less than a total number of ports of the switching chips, any switching chip in a first switching chipset is connected to each switching chip in a second switching chipset through an internal port, and any switching chip in the second switching chipset is connected to each switching chip in the first switching chipset through the internal port, at least one of remaining ports of all switching chips is used as the uplink port to connect the processor, and at least two of remaining ports of all switching chips are used as the downlink ports to connect the accelerator cards.

6. The heterogeneous server with multiple accelerator cards according to claim 5, wherein the switching chipset comprises four switching chips, each of the four switching chips has nine ports, any switching chip in the first switching chipset is respectively connected to the four switching chips in the second switching chipset through four internal ports, and any switching chip in the second switching chipset is respectively connected to the four switching chips in the first switching chipset through the four internal ports, eight of the remaining ports of all switching chips are used as the uplink ports to connect eight processors, and the remaining thirty-two ports are used as the downlink ports to connect thirty-two accelerator cards.

7. The heterogeneous server with multiple accelerator cards according to any one of claims 1 to 4, wherein the switching unit comprises a plurality of switching chips, a number of switching chips is less than a number of ports of the switching chips, any switching chip is connected to remaining switching chips through the internal ports, at least one of remaining ports of all switching chips is used as the uplink port to connect the processor, and at least two of remaining ports of all switching chips are used as the downlink ports to connect the accelerator cards.

8. The heterogeneous server with multiple accelerator cards according to claim 7, wherein the switching unit comprises six switching chips, each of the six switching chips has nine ports, any switching chip is connected to the remaining switching chips through five internal ports, sixteen of the remaining ports of all switching chips are used as the downlink ports to connect the accelerator cards, and the remaining at least four ports are used as the uplink ports to connect four processors.

9. The heterogeneous server with multiple accelerator cards according to any one of claims 1 to 4, wherein at least one processor is connected to the uplink ports of different switching chips.

10. The heterogeneous server with multiple accelerator cards according to any one of claims 1 to 4, wherein the switching unit further comprises a first substrate controller and a first complex programmable logic chip, wherein the first substrate controller is connected to the first complex programmable logic chip and the management controller, and the first complex programmable logic chip is connected to the management controller and the switching chips;
the first complex programmable logic chip is configured to control power on/off timing of the management controller and the switching chips; and
the first substrate controller is configured to write the preset task resource requirement into the management controller, and receive link information of the resource link fed back by the management controller, wherein the link information comprises a processor identification (ID) occupied by the resource link, an accelerator card ID, a switching chip ID and a port ID on the switching chip.

11. The heterogeneous server with multiple accelerator cards according to claim 10, wherein the management controller comprises a first management controller and a second management controller which are mutually redundant, wherein the first management controller is connected to the second management controller through a first switching chip, the first switching chip is connected to the first substrate controller, the first substrate controller is further configured to receive fault information sent by the first management controller or the second management controller, after receiving the fault information from the first management controller, control the first switching chip to disconnect the first management controller from the switching chips, and switch the second management controller to be connected to the switching chips; or after receiving the fault information from the second management controller, control the first switching chip to disconnect the second management controller from the switching chips, and switch the first management controller to be connected to the switching chips.

12. The heterogeneous server with multiple accelerator cards according to any one of claims 1 to 4, wherein the heterogeneous accelerated computing pooling unit further comprises a second substrate controller and a second complex programmable logic chip, wherein the second substrate controller is connected to the second complex programmable logic chip and the accelerator cards;
the second complex programmable logic chip is configured to control power on/off timing of the accelerator cards; and
the second substrate controller is configured to obtain status information of the accelerator cards.

13. The heterogeneous server with multiple accelerator cards according to claim 12, wherein the heterogeneous accelerated computing pooling unit further comprises second switching chips, and the accelerator cards are connected to the second substrate controller, the second complex programmable logic chip and the switching chips through the second switching chips.

14. The heterogeneous server with multiple accelerator cards according to any one of claims 1 to 4, wherein the general computing resource pooling unit further comprises a third substrate controller and a third complex programmable logic chip, wherein the third substrate controller is connected to the third complex programmable logic chip and the processor;
the third complex programmable logic chip is configured to control power on/off timing of the processor; and
the third substrate controller is configured to obtain status information of the processor.

15. The heterogeneous server with multiple accelerator cards according to any one of claims 1 to 4, wherein the heterogeneous accelerated computing pooling unit further comprises an interface board and an adapter substrate, wherein the adapter substrate is provided with adapter interfaces and a slot,
the accelerator card is connected to the interface board through an adapter card, and the interface board is connected to the downlink port of the switching chip; or
the accelerator card is connected to the adapter interface through the adapter card, the adapter interface is connected to the interface board, and the interface board is connected to the downlink port of the switching chip; or
the accelerator card is connected to the slot, the slot is connected to the adapter interface, the adapter interface is connected to the interface board, and the interface board is connected to the downlink port of the switching chip.

16. The heterogeneous server with multiple accelerator cards according to any one of claims 1 to 4, wherein the switching unit further comprises a first substrate controller and a first complex programmable logic chip, wherein the first complex programmable logic chip is respectively connected to the switching chip, the first substrate controller and the management controller, and the management controller is connected to the first substrate controller;
the heterogeneous accelerated computing pooling unit further comprises a second substrate controller and a second complex programmable logic chip, wherein the second complex programmable logic chip is respectively connected to the accelerator card and the second substrate controller;
the general computing resource pooling unit further comprises a third substrate controller and a third complex programmable logic chip, wherein the third complex programmable logic chip is respectively connected to the processor and the third substrate controller; and
the third complex programmable logic chip is connected to the first complex programmable logic chip, and the first complex programmable logic chip is connected to the second complex programmable logic chip.

17. A resource link reconfiguration method, implemented based on the heterogeneous server with multiple accelerator cards according to any one of claims 1 to 16, and applied to a management controller, comprising:
obtaining a task resource requirement and chip information of each current switching chip;
determining a resource link reconfiguration instruction according to the task resource requirement and the chip information of each current switching chip; and
sending the resource link reconfiguration instruction to each target switching chip to form a resource link for completing a computing task corresponding to the task resource requirement.

18. The resource link reconfiguration method according to claim 17, wherein determining the resource link reconfiguration instruction according to the task resource requirement and the chip information of each current switching chip comprises:
searching for a target switching chip identification (ID) and a target port ID on the target switching chip based on the preset task resource requirement, a switching chip ID, a port ID of the switching chip, port bandwidth, a port rate, port connection information and port usage information for minimizing link communication overhead, and generating the resource link reconfiguration instruction comprising the target switching chip ID and the target port ID on the target switching chip.

19. The resource link reconfiguration method according to claim 17, wherein determining the resource link reconfiguration instruction according to the task resource requirement and the chip information of each current switching chip comprises:
displaying the preset task resource requirement, a switching chip identification (ID), a port ID of the switching chip, port bandwidth, a port rate, port connection information and port usage information on a display device through a graphical interface; and
receiving the resource link reconfiguration instruction input through the graphical interface.

20. A resource link reconfiguration apparatus, implemented based on the heterogeneous server with multiple accelerator cards according to any one of claims 1 to 15, and applied to a management controller, comprising:
an information obtaining module configured to obtain a task resource requirement and chip information of each current switching chip;
an instruction determining module configured to determine a resource link reconfiguration instruction according to the task resource requirement and the chip information of each current switching chip; and
an instruction sending module configured to send the resource link reconfiguration instruction to each target switching chip to form a resource link for completing a computing task corresponding to the task resource requirement.

21. An electronic device, comprising: a memory, a processor and computer readable instructions stored in the memory and executable on the processor, wherein the processor implements the resource link reconfiguration method according to any one of claims 17 to 19 when executing the program.

22. A non-transitory computer readable storage medium having computer readable instructions stored thereon, wherein the computer readable instructions, when executed by one or more processors, cause the processors to perform the resource link reconfiguration method according to any one of claims 17 to 19.

23. The heterogeneous server with multiple accelerator cards according to claim 1, wherein the switching unit further comprises a first substrate controller and a first complex programmable logic chip, wherein the first complex programmable logic chip is respectively connected to the switching chip, the first substrate controller and the management controller, and the management controller is connected to the first substrate controller;
the heterogeneous accelerated computing pooling unit further comprises a second substrate controller and a second complex programmable logic chip, wherein the second complex programmable logic chip is respectively connected to the accelerator card and the second substrate controller;
the general computing resource pooling unit further comprises a third substrate controller and a third complex programmable logic chip, wherein the third complex programmable logic chip is respectively connected to the processor and the third substrate controller;
the third complex programmable logic chip is connected to the first complex programmable logic chip, and the first complex programmable logic chip is connected to the second complex programmable logic chip; and
the second complex programmable logic chip controls the accelerator card and the second substrate controller to be powered on, the first complex programmable logic chip controls the switching chip, the management controller and the first substrate controller to be powered on, and the third complex programmable logic chip controls the processor and the third substrate controller to be powered on, wherein a power off sequence is opposite to a power on sequence.
